# EUROPÄISCHE PATENTSCHRIFT

(11) **EP 4 261 458 B1**
(45) Veröffentlichungstag und Bekanntmachung des Hinweises auf die Patenterteilung: **29.04.2026**
(21) Anmeldenummer: 23164313.1
(22) Anmeldetag: 27.03.2023
(51) Int. Cl.: F23N 5/24, F23N 5/26, H01F 7/18, F16K 37/00

(54) **VERFAHREN ZUM ÜBERWACHEN EINES ELEKTROMAGNETISCHEN VENTILS, COMPUTERPROGRAMM, REGEL- UND STEUERGERÄT UND HEIZGERÄT**
METHOD FOR MONITORING AN ELECTROMAGNETIC VALVE, COMPUTER PROGRAM, CONTROL DEVICE AND HEATING DEVICE
PROCÉDÉ DE SURVEILLANCE D'UNE SOUPAPE ÉLECTROMAGNÉTIQUE, PROGRAMME INFORMATIQUE, APPAREIL DE COMMANDE ET DE RÉGULATION ET APPAREIL DE CHAUFFAGE

(30) Priorität: 29.03.2022 DE 102022107383
(43) Veröffentlichungstag der Anmeldung: 18.10.2023
(73) Patentinhaber: Vaillant GmbH, 42859 Remscheid NRW (DE)
(72) Erfinder: Grabe, Jochen, 51688 Wipperfürth (DE); Wölfl, Carsten, 42853 Remscheid (DE)
(74) Vertreter: Popp, Carsten

(56) Entgegenhaltungen:
- AT-B1- 510 600
- DE-A1- 102010 032 554
- US-A1- 2006 141 409
- US-A1- 2008 148 831

## Beschreibung

Die Erfindung betrifft ein Verfahren zum Überwachen eines elektromagnetischen Gasventils oder Bypassventils, ein Computerprogramm und ein Heizgerät.

Heizgeräte weisen in der Regel mehrere elektromagnetisch betreibbare Ventile auf. Diese können durch ein elektrisches Signal angesteuert und betätigt werden, bzw. eine Öffnungsposition eingestellt werden. Aufgrund einer mechanischen Blockade, beispielsweise einem Verklemmen eines Ventilkolbens, kann das Ventil in einer Öffnungsposition verharren, wobei dies von der Ventilansteuerung nicht erkannt werden kann. Dies kann insbesondere Heizgeräte mit einem pneumatischen Gas-Luftverbund betreffen. Beispielsweise bei wasserstoffbetriebenen Heizgeräten mit einem pneumatischen Gas-Luftverbund kommt für den Zündvorgang ein elektromagnetisch betriebenes Bypassventil zum Einsatz, das die Luftzahl in der Startphase durch Zuführung von zusätzlichem Brenngas erhöhen kann.

Um möglichen, häufig sicherheitsrelevanten, Fehlfunktionen eines Heizgerätes aufgrund eines blockierten elektromagnetisch betreibbaren Ventils zu begegnen, werden beispielsweise Gasventile häufig doppelt ausgeführt und mit einer fehlersicheren Ansteuerung betrieben. Dies ist jedoch mit Kosten und Aufwand verbunden.

In der US 2014/ 0 095 052 A1 wird ein Verfahren zum Überwachen einer Schließ-Endposition eines Gasinjektors für eine Brennkraftmaschine, beispielsweise einem OttoMotor, offenbart, bei dem eine Testspannung an den Injektor angelegt und ein Entladestrom gemessen wird.

Die DE 10 2010 032 554 A1 beschreibt ein Kraftstoffeinspritzsystem und das Bestimmen der Position einer Nadel eines nicht gattungsgemäßen Kraftstoffeinspritzventils.

Die US 2006/141409 A1 offenbart ein Verfahren zur Überprüfung eines Pilotventils eines Heizgerätes, jedoch zumindest nicht die Merkmale des Schritts c) von Anspruch 1.

Hiervon ausgehend ist es Aufgabe der Erfindung, ein Verfahren zum Überwachen eines elektromagnetischen Gasventils oder Bypassventils vorzuschlagen, das die geschilderten Probleme des Standes der Technik zumindest teilweise überwindet. Insbesondere soll ein Feststellen einer Öffnungsweite eines elektromagnetischen Ventils ermöglicht werden.

Insbesondere soll zur Überwindung der Probleme die Komplexität eines Heizgerätes nicht wesentlich erhöht werden und/oder es sollen nur geringe bauliche Veränderungen an einem Heizgerät erforderlich sein und/oder es soll eine einfache Integration in einen bestehenden Produktionsprozess ermöglicht sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Überwachen eines elektromagnetisch betreibbaren Gasventils eines Heizgerätes oder Bypassventils eines Heizgerätes mit einem pneumatischen Gas-Luftverbund bei, umfassend zumindest die folgenden Schritte:
a) Beaufschlagen des Gasventils oder Bypassventils mit einem Testsignal,
b) Erfassen eines Feedbacksignals
   wobei für das Feedbacksignal ein Stromsignal des Gasventils oder Bypassventils herangezogen wird und in einem Schritt
c) eine Öffnungsposition des Gasventils oder Bypassventils festgestellt wird anhand einer Feedbackdauer vom Beaufschlagen des Testsignals bis zu einem Erreichen mindestens eines vorgegebenen Schwellwertes durch das Stromsignal.

Die Schritte a), b) und c) können bei einem regulären Betriebsablauf mindestens einmal in der angegebenen Reihenfolge durchgeführt werden. Insbesondere kann das Verfahren beim Betrieb des Heizgerätes regelmäßig (in zeitlichen Abständen, beispielsweise jede Minute oder Stunde) durchgeführt werden Das Verfahren dient einer Überwachung eines elektromagnetisch betreibbaren Ventils eines Heizgerätes, nämlich eines Gasventils oder eines Bypassventils eines Heizgerätes mit einem pneumatischen Gas-Luftverbund, insbesondere eines mit Wasserstoff betriebenen Heizgerätes. Die Überwachung des elektromagnetisch betreibbaren Ventils kann insbesondere durch den Vergleich eines Schaltzustandes (geöffnet oder geschlossen) mit einem im Rahmen der Verfahrensdurchführung festgestellten Öffnungszustand erfolgen und eine Fehlfunktion bei Abweichungen festgestellt werden. Das Verfahren kann beispielsweise auf einem Regel- und Steuergerät des Heizgerätes durchgeführt werden.

Bei dem Heizgerät handelt es sich um ein Gasheizgerät, welches dazu eingerichtet ist, einen gasförmigen Brennstoff, insbesondere Wasserstoff oder ein Wasserstoff enthaltendes Gasgemisch, unter Zufuhr von Umgebungsluft (als Verbrennungsluft) zu verbrennen, um Wärme beispielsweise für einen Heizkreislauf oder eine Warmwasserversorgung bereitzustellen. Das Heizgerät kann zumindest einen Brenner und eine Fördereinrichtung aufweisen, die ein Gemisch von Brennstoff (Gas) und Verbrennungsluft durch einen Gemischkanal des Heizgerätes zum Brenner fördert. Im Anschluss können die Verbrennungsprodukte durch einen Abgaskanal des Heizgerätes zu einer Abgasanlage geführt werden.

Das Heizgerät kann insbesondere einen pneumatischen Gas-Luftverbund aufweisen. Hierbei kann einem Massestrom Verbrennungsluft pneumatisch, beispielsweise unter Einbeziehung einer Venturi-Düse, ein, einem gewünschten Verbrennungsluftverhältnis (Luftzahl) entsprechender, Massestrom Brenngas zugesetzt werden. Bei einer Inbetriebnahme eines Heizgerätes, insbesondere eines mit Wasserstoff betriebenen, kann das Verbrennungsluftverhältnis für den Zündvorgang angehoben werden. Hierzu kann über ein elektromagnetisch betriebenes Bypassventil ein zusätzlicher Massestrom Brenngas zugesetzt werden.

Bei dem elektromagnetisch betreibbaren Ventil, das auch als Magnetventil bezeichnet wird, handelt es sich um ein Ventil, das durch einen Elektromagneten betätigt werden kann. Häufig ist ein Kern einer Spule beweglich gelagert und mit einer Federkraft beaufschlagt und durch einen in der Spule fließenden elektrischen Strom (und daraus resultierenden magnetischen Feld) derart bewegbar, dass das Ventil betätigt wird. Ein hier vorgeschlagenes Verfahren kann beispielsweise mit direktgesteuerten oder vorgesteuerten elektromagnetisch betreibbaren Ventilen durchgeführt werden.

Das elektromagnetisch betreibbare Ventil kann einen ausgeschalteten Zustand einnehmen, in dem kein elektrischer Strom fließt und somit keine magnetischen Kräfte auf den Spulenkern und damit den Ventilkolben wirken. In der Regel ist ein Gas- oder Bypassventil eines Heizgerätes im ausgeschalteten Zustand aus Sicherheitsgründen geschlossen. In einem geschalteten Zustand kann ein magnetisches Feld der Spule den Spulenkern derart bewegen, dass das Ventil geöffnet wird.

Gemäß einer vorteilhaften Ausgestaltung kann das Testsignal ein Spannungsimpuls einer definierten Testdauer oder ein Ausschalten des Ansteuerungssignals des Ventils für eine definierte Testdauer sein. Dabei kann ein Spannungsimpuls als Testsignal insbesondere bei einem Ventil im ausgeschalteten Zustand und ein Ausschalten des Ansteuerungssignals des Ventils im geschalteten Zustand des Ventils zum Einsatz kommen. Der Spannungsimpuls bzw. das Ausschalten des Ansteuerungssignals kann dabei insbesondere als Rechtecksignal ausgebildet sein, beispielsweise durch Einwirkung eines (ansteuerbaren) Schalters.

Gemäß einer vorteilhaften Ausgestaltung kann in Schritt a) das Ventil mit einem Testsignal für eine Testdauer beaufschlagt werden, wobei die Testdauer derart gewählt ist, dass sich das Ventil während der Durchführung des Schrittes a) nicht mechanisch bewegt. Diese vorgegebene Grenztestdauer kann beispielsweise im Vorfeld an einem Referenzventil im Rahmen von Versuchen ermittelt worden sein. Vorteilhaft können durch ein Vermeiden eines mechanischen Bewegens des Ventils und einer damit verbundenen Änderung der Öffnungsposition verfahrensbedingte Störungen im Betriebsablauf des Heizgerätes vermieden und somit eine sichere Verfahrensdurchführung ohne Beeinflussung des Betriebes des Heizgerätes gewährleistet werden.

Dabei wird zum Erfassen des Feedbacksignals ein Stromsignal des elektromagnetisch betreibbaren Ventils herangezogen werden und in einem Schritt c) eine Öffnungsposition des Ventils festgestellt werden anhand einer Feedbackdauer vom Beaufschlagen des Testsignals bis zu einem Erreichen (Unterschreiten oder Überschreiten) mindestens eines vorgegebenen Schwellwertes durch das Stromsignal. So wurde festgestellt, dass sich die Feedbackdauer bei geöffneten gegenüber einem geschlossenen Ventil um einen Faktor in einem Bereich von zwei unterscheidet und so eine Öffnungsposition des Ventils anhand der Feedbackdauer sicher festgestellt werden kann.

Mit anderen Worten kann in einem Schritt c) eine Öffnungsposition anhand einer erfassten Zeitdauer (Feedbackdauer) festgestellt werden. Die Feedbackdauer kann mit (Beginn oder Ende) des Testsignals beginnen und enden, wenn ein erfasstes Stromsignal mindestens einen vorgegebenen Schwellwert über- oder unterschreitet. Ein Überschreiten kann insbesondere bei einem Spannungsimpuls als Testsignal und ein Unterschreiten bei einem Ausschalten des Ansteuerungssignals des Ventils auftreten.

Ein Schwellwert kann dabei eine Öffnungsposition des Ventils kennzeichnen und ein im Vorfeld an einem Referenzventil ermittelter Wert (eines elektrischen Stromes) sein. In einer einfachen Ausgestaltung kann ein Schwellwert vorgesehen sein, der eine Unterscheidung zwischen einer geöffneten und einer geschlossenen Öffnungsposition ermöglicht. Es können auch mehrere Schwellwerte einbezogen werden, die verschiedenen Öffnungspositionen (Öffnungsweiten) des Ventils entsprechen können.

Gemäß einer vorteilhaften Ausgestaltung kann die Testdauer und/ oder die Feedbackdauer durch eine oder vielfache, von einem Regel- und Steuergerät vorgegebenen, Zeitschleife/n bemessen werden. Vorteilhaft kann so die Implementation eines hier vorgeschlagenen Verfahrens in ein Regel- und Steuergerät vereinfacht werden. So bieten bekannte Regel- und Steuergeräte häufig eine (definierte) Zeitschleife, beispielsweise ein Zeitraum von 1 ms [Millisekunde], zur Programmierung. Durch Nutzung der Zeitschleife kann eine aufwändige Softwareimplementierung einer Timer-Funktionalität vermieden werden. Das Testsignal kann somit in einem Spannungssignal (oder einem Ausschalten des Ansteuerungssignals) für die Zeitdauer einer oder mehrerer Zeitschleifen erfolgen, beispielsweise durch Ansteuerung eines Schalters. Auch für das Ermitteln der Feedbackdauer kann die Zeitschleife herangezogen werden, indem nach Ablauf einer Zeitschleife überprüft wird, ob ein Überschreiten oder Unterschreiten eines Schwellwertes festgestellt werden kann. Die Anzahl der abgelaufenen Zeitschleifen kann dann die Feedbackdauer angeben.

Gemäß einer vorteilhaften Ausgestaltung kann ein Erfassen des Feedbacksignals gemäß Schritt b) für die Zeitdauer einer Maximalzeit erfolgen. Die Maximalzeit kann dabei eine Zeitdauer sein, in der für ein konkretes elektromagnetisch betreibbares Ventil ein Feedbacksignal als Reaktion auf das Testsignal zu erwarten wäre.

Gemäß einer vorteilhaften Ausgestaltung kann das Verfahren beim Ausbleiben eines Feedbacksignals innerhalb der Maximalzeit erneut durchgeführt werden, wobei die Zeitdauer des Testsignals verlängert werden kann. Die Testdauer kann beispielsweise um eine oder mehrere Zeitschleifen verlängert werden, wobei ein Abbruchkriterium die Grenztestdauer sein kann, bei der ein mechanisches Bewegen des Ventils nicht mehr auszuschließen ist.

Gemäß einer vorteilhaften Ausgestaltung kann in einem Schritt d) eine Fehlfunktion des Ventils festgestellt werden, wenn eine in Schritt c) festgestellte Öffnungsposition nicht einer Schaltposition des Ventils entspricht. Beispielsweise wäre dies der Fall, wenn das Ventil geschaltet ist und somit geöffnet sein sollte, in Schritt c) eine geschlossene Öffnungsposition festgestellt wird und umgekehrt. Eine weitere Fehlfunktion könnte durch ein vollständig fehlendes Feedbacksignal innerhalb der Maximalzeit angezeigt werden, das auf eine defekte oder nicht angeschlossene Spule hinweisen kann.

Gemäß einer vorteilhaften Ausgestaltung kann beim Feststellen einer Fehlfunktion in Schritt d) in einem Schritt e) eine Information über die Fehlfunktion über eine Anzeigeeinrichtung angezeigt und/ oder über ein Netzwerk zum Abruf bereitgestellt und/ oder über ein Netzwerk als Nachricht versandt, und/ oder das Heizgerät in einen Fehlerzustand versetzt werden. Somit kann, beim Feststellen einer Fehlfunktion, einem Nutzer oder einem betreuenden Fachbetrieb eine Nachricht hierzu übermittelt werden oder über das Netzwerk zum Abruf, beispielsweis durch eine Anwendung (App) auf einem mobilen Endgerät, bereitgestellt werden. Das Netzwerk kann dabei beispielsweise das Internet sein. Vorteilhaft kann so der Fachbetrieb nach Erhalt der Information einen Wartungstermin selbstständig planen und durchführen. In vorteilhafter Weise kann durch die Einbeziehung eines Schwellwertes eine Auswertung eines analogen Stromsignals vermieden werden und so ein Implementieren eines hier vorgeschlagenen Verfahrens in einem Regel- und Steuergerät eines Heizgerätes vereinfacht werden.

Alternativ oder kumulativ kann das Heizgerät nach einem Feststellen einer Fehlfunktion des Ventils das Heizgerät (automatisiert) in einen Fehlerzustand verbracht werden, in dem dieses ausgeschaltet ist und eine erneute Inbetriebnahme blockiert wird. Der Fehlerzustand kann im Rahmen eines Wartungstermins durch einen Fachbetrieb nach Überprüfung/ Instandsetzung des Ventils wieder beendet werden.

Nach einem weiteren Aspekt wird ein Heizgerät mit einem elektromagnetisch betreibbaren Ventil und Mitteln vorgeschlagen, wobei die Mittel geeignet sind, die ein hier vorgeschlagenes Verfahren auszuführen. Es wird zudem ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm (-produkt), umfassend Befehle, die bei der Ausführung des Programms durch das Heizgerät bzw. einen Computer, diesen veranlassen, ein hier vorgeschlagenes Verfahren auszuführen.

Nach einem weiteren Aspekt wird auch ein maschinenlesbares Speichermedium vorgeschlagen, auf dem das Computerprogramm gespeichert ist.

Regelmäßig handelt es sich bei dem maschinenlesbaren Speichermedium um einen computerlesbaren Datenträger.

Nach einem weiteren Aspekt wird auch ein Regel- und Steuergerät eines Heizgerätes vorgeschlagen, eingerichtet zur Durchführung eines hier vorgeschlagenen Verfahrens. Das Regel- und Steuergerät kann hierzu beispielsweise einen Prozessor aufweisen, und/ oder über diesen verfügen. In diesem Zusammenhang kann der Prozessor beispielsweise das auf einem Speicher (des Regel- und Steuergeräts) hinterlegte Verfahren ausführen. In vorteilhafter Weise können auf dem Speicher des Regel- und Steuergeräts auch Betriebsdaten und Referenzwerte (beispielsweise ein oder mehrere Schwellwerte, eine Maximalzeit und/ oder eine Grenztestdauer) zur Durchführung eines hier vorgestellten Verfahrens hinterlegt werden oder sein.

Nach einem weiteren Aspekt wird auch ein Heizgerät vorgeschlagen, aufweisend ein hier vorgeschlagenes Regel- und Steuergerät. Bei dem Heizgerät handelt sich insbesondere um ein Gasheizgerät insbesondere um ein wasserstoffbetriebenes Gasheizgerät. Das Gasheizgerät kann einen Brenner und eine Fördereinrichtung aufweisen, mit der ein Gemisch aus Verbrennungsgas (Wasserstoff) und Verbrennungsluft dem Brenner zugeführt werden kann. Das Heizgerät kann insbesondere einen pneumatischen Gas-Luftverbund aufweisen.

Die im Zusammenhang mit dem Verfahren erörterten Details, Merkmale und vorteilhaften Ausgestaltungen können entsprechend auch bei dem hier vorgestellten Computerprogramm, dem Regel- und Steuergerät, dem Heizgerät und/oder der Verwendung auftreten und umgekehrt. Insoweit wird auf die dortigen Ausführungen zur näheren Charakterisierung der Merkmale vollumfänglich Bezug genommen.

Hier wird somit ein Verfahren zum Überwachen eines elektromagnetischen Ventils, ein Computerprogramm, ein Regel- und Steuergerät und ein Heizgerät angegeben, welche die mit Bezug auf den Stand der Technik geschilderten Probleme zumindest teilweise lösen. Insbesondere tragen das Verfahren, das Computerprogramm, das Regel- und Steuergerät und das Heizgerät zumindest dazu bei, ein regelmäßiges und automatisiertes Überprüfen der Funktion eines elektromagnetisch betreibbaren Ventils zu ermöglichen.

Zudem kann die Erfindung ohne oder nur mit unwesentlichen baulichen Änderungen an einem Heizgerät durchgeführt werden, gegebenenfalls ist ein Implementieren eines hier vorgeschlagenen Computerprogramms beispielsweise auf einem Regel- und Steuergerät des Heizgerätes ausreichend. Weiterhin vorteilhaft kann die Erfindung die Betriebssicherheit eines Heizgerätes erhöhen, indem ein Abschalten des Heizgerätes oder ein Verbringen desselben in einen Fehlerzustand beim Feststellen einer Fehlfunktion des Ventils initiiert wird.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig. 1: einen Ablauf eines hier vorgeschlagenen Verfahrens,
Fig. 2: ein Schaltbild einer Schaltung zur Durchführung eines hier vorgeschlagenen Verfahrens,
Fig. 3: ein hier vorgeschlagenes Heizgerät,
Fig. 4: Parameterverläufe, die sich bei der Durchführung eines hier vorgestellten Verfahrens einstellen können, und
Fig. 5: unterschiedliche Test- und Feedbacksignale zur Durchführung eines hier vorgeschlagenen Verfahrens.

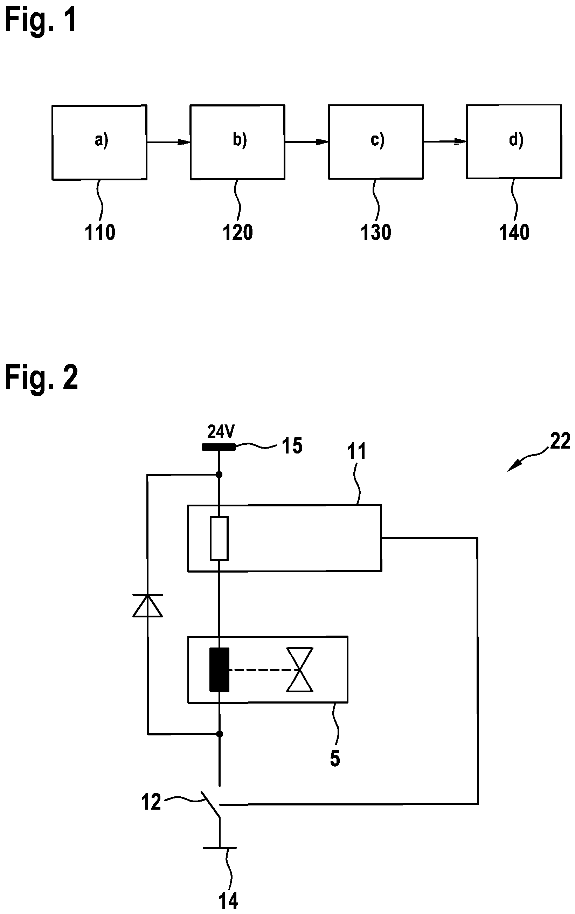

Fig. 1 zeigte beispielhaft und schematisch einen Ablauf eines hier vorgeschlagenen Verfahrens. Das Verfahren dient einer Überprüfung eines elektromagnetisch betreibbaren Ventils 5 eines Heizgerätes 1. Die mit Blöcken 110, 120, 130 und 140 dargestellte Reihenfolge der Schritte a), b), c) und d) kann sich bei einem regulären Betriebsablauf einstellen.

Fig. 2 zeigt beispielhaft und schematisch ein Schaltbild einer Schaltung 22 zur Durchführung eines hier vorgeschlagenen Verfahrens. Diese kann eine Spannungsquelle 15, beispielsweise eine Gleichspannung von 24 Volt bereitstellen, einen Microcontroller 11 und einen Schalter 12, der mit Masse 14 verbunden ist, umfassen. Der Microcontroller 11 kann dabei den Schalter 12 durch Ansteuerung öffnen und schließen.

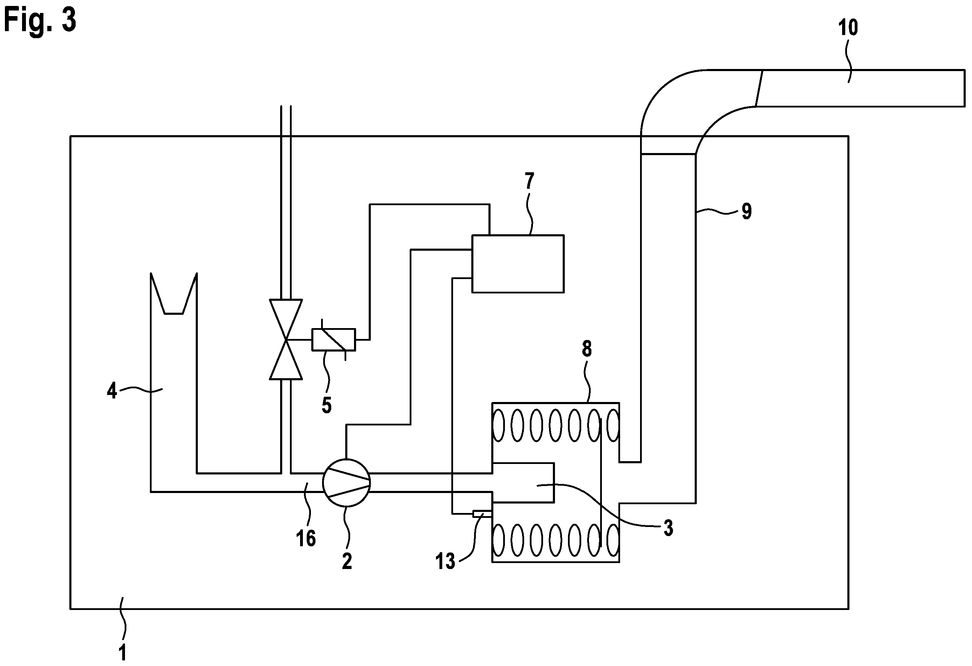

Fig. 3 zeigt beispielhaft und schematisch ein hier vorgeschlagenes Heizgerät 1. Dieses kann über eine Zuführung Verbrennungsluft 4 Verbrennungsluft durch eine Fördereinrichtung 2 ansaugen/ fördern und über ein Ventil 5 ein Gas, beispielsweise Wasserstoff, dem angesaugten Volumenstrom Verbrennungsluft zusetzen. Der Gas-Luftverbund kann dabei ein pneumatischer Gas-Luftverbund sein. Das Verbrennungsgemisch aus Gas und Verbrennungsluft kann nunmehr über einen Gemischkanal 16 einem in einer Brennkammer 8 angeordneten Brenner 3 zugeführt werden. Die Verbrennungsprodukte können über einen Abgaskanal 9 aus der Brennkammer 8 einer Abgasanlage 10 zugeführt werden. Zudem kann das Heizgerät 1 an der Brennkammer 8 einen UV-Sensor 13 zur Überwachung einer Flamme des Brenners 3 umfassen.

Ein Regel- und Steuergerät 7 kann zur Durchführung eines hier vorgestellten Verfahrens eingerichtet sein. Hierzu kann das Regel- und Steuergerät 7 mit der Fördereinrichtung 2, dem Ventil 5 und dem Microcontroller 11 elektrisch verbunden sein.

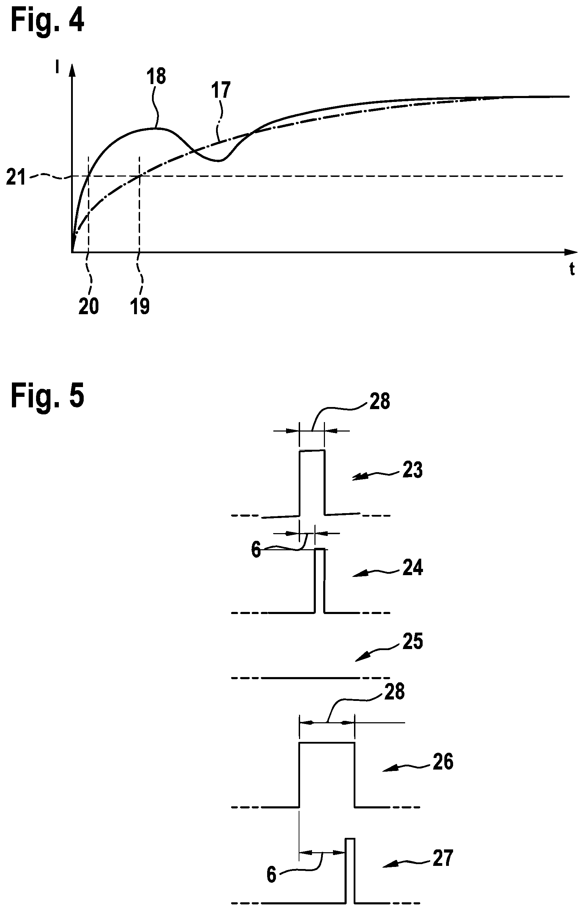

Fig. 4 zeigt beispielhaft und schematisch Parameterverläufe, die sich bei der Durchführung eines hier vorgestellten Verfahrens einstellen können. Das Diagramm zeigt ein erstes Stromsignal 17 und ein zweites Stromsignal 18 die eine Antwort auf ein beaufschlagtes Testsignal 23, 26 sein können. Durch ein Überschreiten eines Schwellwertes 21 kann eine erste Feedbackdauer 19 des ersten Stromsignals 17 und eine zweite Feedbackdauer 20 eines zweiten Stromsignals 18 festgestellt werden. Das Ventil 5 kann sich hierbei in einem ausgeschalteten Zustand befinden und geschlossen sein (Schaltzustand). Nunmehr kann die erste Feedbackdauer 19 ein geöffnetes Ventil 5 anzeigen und somit eine Fehlfunktion. Die zweite Feedbackdauer 20, welche ca. der Hälfte der ersten Feedbackdauer 19 entspricht, kann ein geschlossenes Ventil 5 anzeigen und somit eine einwandfreie Funktion des Ventils 5.

Fig. 5 zeigt unterschiedliche Testsignale 23, 26 und Feedbacksignale 24, 25, 27, die sich bei der Durchführung eines hier vorgeschlagenen Verfahrens einstellen können. Ein Testsignal 23, 26 kann eine Testdauer 28 und ein Feedbacksignal 24, 25, 27 eine Feedbackdauer 6 aufweisen. So kann ein erstes Testsignal 23 bei einem geschlossenen Ventil 5 (Schaltzustand) ein erstes Feedbacksignal 24 hervorrufen, das ein geschlossenes Ventil 5 anzeigt, und ein zweites Feedbacksignal 25, das ein geöffnetes Ventil 5 anzeigt, somit einen Fehlerzustand.

Das zweite Testsignal 26 zeigt einen längeren Rechteckimpuls im Vergleich zum ersten Testsignal 23, welches ein dem ersten Feedbacksignal 24 auf das erste Testsignal 23 weitestgehend gleichförmiges zweites Feedbacksignal 25 auf zweites Testsignal 27 für ein geschlossenes Ventil 5 hervorrufen und somit eine einwandfreie Funktion des Ventils 5 anzeigen kann.

In Block 110 kann gemäß Schritt a) ein Beaufschlagen des Ventils 5 mit einem Testsignal 23, 26 erfolgen. Hierzu kann der Microcontroller 11 den Schalter 12 für eine Testdauer 28 öffnen.

In Block 120 kann gemäß Schritt b) ein Erfassen eines Feedbacksignals 24, 25, 27 erfolgen. Für das Feedbacksignal 24, 25, 27 kann ein Stromsignal 17, 18 herangezogen werden.

In Block 130 kann gemäß Schritt c) eine Öffnungsposition des Ventils 5 anhand einer Feedbackdauer 6 vom Beaufschlagen (Beginn) des Testsignals 23, 26 bis zu einem Unterschreiten oder Überschreiten eines vorgegebenen Schwellwertes 21 durch ein Stromsignal 17, 18, festgestellt werden.

In Block 140 kann gemäß Schritt d) eine Fehlfunktion des Ventils 5 festgestellt werden, wenn eine in Schritt c) festgestellte Öffnungsposition nicht einer geschalteten Position (Schaltposition) des Ventils 5 entspricht.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

### Bezugszeichenliste

- 1: Heizgerät
- 2: Fördereinrichtung
- 3: Brenner
- 4: Zuführung Verbrennungsluft
- 5: Ventil
- 6: Feedbackdauer
- 7: Regel- und Steuergerät
- 8: Brennkammer
- 9: Abgaskanal
- 10: Abgasanlage
- 11: Microcontroller
- 12: Schalter
- 13: UV-Sensor
- 14: Masse
- 15: Spannungsquelle
- 16: Gemischkanal
- 17: erstes Stromsignal
- 18: zweites Stromsignal
- 19: erste Feedbackdauer
- 20: zweite Feedbackdauer
- 21: Schwellwert
- 22: Schaltung
- 23: erstes Testsignal
- 24: erstes Feedbacksignal auf erstes Testsignal
- 25: zweites Feedbacksignal auf erstes Testsignal
- 26: zweites Testsignal
- 27: Feedbacksignal auf zweites Testsignal
- 28: Testdauer

## Patentansprüche

1. Verfahren zum Überwachen eines elektromagnetisch betreibbaren Gasventils (5) eines Heizgerätes (1) oder Bypassventils eines Heizgerätes (1) mit einem pneumatischen Gas-Luftverbund, umfassend zumindest die folgenden Schritte:
a) Beaufschlagen des Gasventils (5) oder Bypassventils mit einem Testsignal (23, 26),
b) Erfassen eines Feedbacksignals (24, 25, 27),
wobei für das Feedbacksignal (24, 25, 27) ein Stromsignal (17, 18) des Ventils (5) herangezogen wird und in einem Schritt
c) eine Öffnungsposition des Gasventils (5) oder Bypassventils festgestellt wird anhand einer Feedbackdauer (6) vom Beaufschlagen des Testsignals (23, 26) bis zu einem Erreichen mindestens eines vorgegebenen Schwellwertes (21) durch das Stromsignal (17, 18).

2. Verfahren nach einem der vorangehenden Ansprüche, wobei das Testsignal (23, 26) ein Spannungsimpuls einer definierten Testdauer (28) oder ein Ausschalten des Ansteuerungssignals des Gasventils (5) oder Bypassventils für eine definierte Testdauer (28) ist.

3. Verfahren nach Anspruch 2, wobei in einem Schritt d) eine Fehlfunktion des Gasventils (5) oder Bypassventils festgestellt wird, wenn eine in Schritt c) festgestellte Öffnungsposition nicht einer Schaltposition des Gasventils (5) oder Bypassventils entspricht.

4. Verfahren nach Anspruch 3, wobei beim Feststellen einer Fehlfunktion in Schritt d) in einem Schritt e) eine Information über die Fehlfunktion über eine Anzeigeeinrichtung angezeigt und/ oder über ein Netzwerk zum Abruf bereitgestellt und/ oder über ein Netzwerk als Nachricht versandt und/ oder das Heizgerät (1) in einen Fehlerzustand versetzt wird.

5. Verfahren nach Anspruch 4, wobei die Testdauer (28) und/ oder die Feedbackdauer (6) durch das Vielfache einer, von einem Regel- und Steuergerät (7) vorgegebenen, Zeitschleife bemessen wird.

6. Verfahren nach einem der vorangehenden Ansprüche, wobei bei einem fehlenden Feedbacksignal (24, 25, 27) in Schritt b) innerhalb einer Grenzzeit das Verfahren erneut mit einer verlängerten Testdauer (28) durchgeführt wird.

7. Verfahren nach Anspruch 6, wobei die Testdauer (28) um eine oder ein Vielfaches einer, von einem Regel- und Steuergerät (7) vorgegebenen, Zeitschleife verlängert wird.

8. Verfahren nach einem der Ansprüche 2 bis 7, wobei die Testdauer (28) derart gewählt ist, dass sich das Gasventil (5) oder Bypassventil während der Durchführung des Schrittes a) nicht mechanisch bewegt.

9. Heizgerät (1) mit einem elektromagnetisch betreibbaren Gasventil (5) oder Bypassventil und einem Regel- und Steuergerät, das eingerichtet ist, die Schritte eines Verfahrens nach einem der vorhergehenden Ansprüche auszuführen.

10. Computerprogramm umfassend Befehle, die ein Heizgerät (1) nach Anspruch 9 dazu veranlassen, die Schritte eines Verfahrens nach einem der vorangehenden Ansprüche 1-8 durchzuführen.

## Claims

1. Method for monitoring an electromagnetically operated gas valve (5) or bypass valve of a heating appliance (1) with a pneumatic gas-air connection, comprising at least the following steps:
a) Applying a test signal (23, 26) to the gas valve (5) or bypass valve,
b) detecting a feedback signal (24, 25, 27),
wherein a current signal (17, 18) of the valve (5) is used for the feedback signal (24, 25, 27) and, in one step,
c) determining an opening position of the gas valve (5) or bypass valve on the basis of a feedback duration (6) from the application of the test signal (23, 26) until at least one predetermined threshold value (21) is reached by the current signal (17, 18).

2. . Method according to one of the preceding claims, wherein the test signal (23, 26) is a voltage pulse of a defined test duration (28) or a switching off of the control signal of the gas valve (5) or bypass valve for a defined test duration (28).

3. . Method according to claim 2, wherein in step d) a malfunction of the gas valve (5) or bypass valve is detected if an opening position detected in step c) does not correspond to a switching position of the gas valve (5) or bypass valve.

4. . Method according to claim 3, wherein, upon detection of a malfunction in step d), in step e) information about the malfunction is displayed via a display device and/or made available for retrieval via a network and/or sent as a message via a network and/or the heating appliance (1) is put into an error state.

5. . Method according to claim 4, wherein the test duration (28) and/or the feedback duration (6) is measured by a multiple of a time loop specified by a control and regulation device (7).

6. . Method according to one of the preceding claims, wherein, in the event of a missing feedback signal (24, 25, 27) in step b), the method is performed again with an extended test duration (28) within a limit time.

7. . Method according to claim 6, wherein the test duration (28) is extended by one or a multiple of a time loop specified by a control and regulation device (7).

8. . Method according to one of claims 2 to 7, wherein the test duration (28) is selected such that the gas valve (5) or bypass valve does not move mechanically during the execution of step a).

9. . Heating appliance (1) with an electromagnetically operable gas valve (5) or bypass valve and a control and regulation device which is designed to carry out the steps of a method according to one of the preceding claims.

10. . Computer programme comprising commands that cause a heating appliance (1) according to claim 9 to carry out the steps of a method according to one of the preceding claims 1-8.

## Revendications

1. Procédé de surveillance d'une vanne de gaz (5) à commande électromagnétique d'un appareil de chauffage (1)
ou d'une vanne de dérivation d'un appareil de chauffage (1) avec une combinaison gaz-air pneumatique, comprenant au moins les étapes
suivantes :
a) sollicitation de la vanne de gaz (5) ou vanne de dérivation avec un signal de test (23, 26),
b) détection d'un signal de rétroaction (24, 25, 27),
dans lequel un signal de courant (17, 18) de la vanne (5) est utilisé pour le signal de rétroaction (24, 25, 27) et, dans une étape
c) une position d'ouverture de la vanne de gaz (5) ou vanne de dérivation est constatée à l'aide d'une durée de rétroaction (6) de la sollicitation du signal de test (23, 26) lorsqu'au moins une valeur seuil prédéfinie (21) est atteinte par l'intermédiaire du signal de courant (17, 18).

2. Procédé selon l'une quelconque des revendications précédentes, dans lequel le signal de test (23, 26) est une impulsion de tension d'une durée de test définie (28) ou une coupure du signal de commande de la vanne de gaz (5) ou vanne de dérivation pour une durée de test définie (28).

3. Procédé selon la revendication 2, dans lequel, à une étape d), un dysfonctionnement de la vanne de gaz (5) ou vanne de dérivation est constaté lorsqu'une position d'ouverture constatée à l'étape c) ne correspond pas à une position de commutation de la vanne de gaz (5) ou vanne de dérivation.

4. Procédé selon la revendication 3, dans lequel, lors de la constatation d'un dysfonctionnement à l'étape d), à une étape e), une information sur le dysfonctionnement est affichée par l'intermédiaire d'un appareil d'affichage et/ou fournie par l'intermédiaire d'un réseau pour consultation et/ou envoyée par l'intermédiaire d'un réseau en tant que message et/ou l'appareil de chauffage (1) est mis dans un état d'erreur.

5. Procédé selon la revendication 4, dans lequel la durée du test (28) et/ou la durée de rétroaction (6) sont mesurées par le multiple d'une boucle temporelle prédéfinie par un appareil de régulation et de commande (7).

6. Procédé selon l'une quelconque des revendications précédentes, dans lequel, en l'absence d'un signal de rétroaction (24, 25, 27) à l'étape b), le procédé est réalisé à nouveau avec une durée de test prolongée (28) au sein d'un délai limite.

7. Procédé selon la revendication 6, dans lequel la durée du test (28) est prolongée d'une boucle temporelle ou d'un multiple de celle-ci prédéfinie par un appareil de régulation et de commande (7).

8. Procédé selon l'une quelconque des revendications 2 à 7, dans lequel la durée de test (28) est sélectionnée de sorte que la vanne de gaz (5) ou de dérivation ne se déplace pas mécaniquement pendant la réalisation de l'étape a).

9. Appareil de chauffage (1) avec une vanne de gaz (5) à commande électromagnétique ou vanne de dérivation et un appareil de régulation et de commande, qui est configuré pour
mettre en œuvre les étapes d'un procédé selon l'une quelconque des revendications précédentes.

10. Programme informatique comprenant des instructions qui amènent un appareil de chauffage (1) selon la revendication 9 à mettre en œuvre les étapes d'un procédé selon l'une quelconque des revendications 1-8.
